# EUROPÄISCHE PATENTSCHRIFT

(11) **EP 2 771 895 B1**
(45) Veröffentlichungstag und Bekanntmachung des Hinweises auf die Patenterteilung: **03.10.2018**
(21) Anmeldenummer: 12783919.9
(22) Anmeldetag: 25.10.2012
(51) Int. Cl.: H01G 9/052

(54) **VERZUGSFREIE SCHABLONENGEDRUCKTE ANODEN AUF TA-/NB-BLECH**
DISTORTION-FREE SCREEN-PRINTED ANODES ON TA/NB SHEET
ANODES RÉSISTANT À LA DÉFORMATION IMPRIMÉES AU POCHOIR SUR UNE TÔLE TA/NB

(30) Priorität: 26.10.2011 DE 102011116939
(43) Veröffentlichungstag der Anmeldung: 03.09.2014
(73) Patentinhaber: H.C. Starck Tantalum and Niobium GmbH, 80339 München (DE)
(72) Erfinder: OTTERSTEDT, Ralph, 38640 Goslar (DE)
(86) Internationale Anmeldenummer: PCT/EP2012/071132
(87) Internationale Veröffentlichungsnummer: WO 2013/060768

(56) Entgegenhaltungen:
- WO-A1-00/16353
- US-A1- 2004 226 630

## Beschreibung

### Technisches Gebiet

Die vorliegende Erfindung betrifft das Gebiet der Herstellung von Anoden. Insbesondere betrifft die vorliegende Erfindung ein Verfahren zu Herstellung von verzugsfreien Anoden mittels Sieb- oder Schablonendruck auf dünnen Tantal- oder Niobfolien. Des Weiteren betrifft die vorliegende Erfindung auch Anoden, die durch das erfindungsgemäße Verfahren erhältlich sind.

### Hintergrund der Erfindung

Tantal-Festelektrolytkondensatoren werden unter anderem wegen ihrer hohen Energiespeicherdichte bevorzugt in portablen Anwendungen wie Mobiltelefonen, Laptops, Palmtops, Camcorder und dergleichen eingesetzt. Hauptbestandteil dieser Ta-Festelektrolytkondensatoren sind dabei Ta-Anoden. Portable elektronische Geräte sollen trotz zunehmender Integrationsdichte der Bauelemente immer dünner werden. Üblicherweise werden solche Anoden durch Aufpressen von Ta- und/oder Nioboxid-Pulver auf dünne Ta-Bleche und anschließendem Sintern hergestellt. Durch dieses konventionelle Aufpressen von Ta-Pulver lassen sich allerdings keine großen Aspektverhältnisse herstellen, d.h. Anoden für flache Ta-Kondensatoren mit geringer Bauhöhe lassen sich auf diese Weise nicht herstellen.

Tantal-Anoden, die durch das Drucken einer Ta-Paste auf eine Ta-Folie als Substrat und anschließendes Entbindern/Sintern hergestellt werden, zeigen nach dem Sintern oftmals einen starken Verzug des Ta-Substrates auf. Die Anode ist dann nicht mehr flach und lässt sich einerseits schlechter prozessieren, andererseits ist die effektive Höhe der Anode größer als wenn kein Verzug aufträte, d.h. es wird Volumen, das mit Aktivmasse gefüllt sein könnte, unnütz verschenkt. Insbesondere höherkapazitive Tantalpulver und NbO-Pulver befördern die Ausbildung eines Verzuges und insbesondere dünne Ta-Folien erfahren einen besonders starken Verzug. Nach dem Stand der Technik werden deshalb dickere Ta-Folien bzw. Bleche mit mehr als 100 Mikrometer Dicke eingesetzt. Das hat zur Folge, dass schablonengedruckte Anoden ein ungünstiges Verhältnis (gesinterter Anodenkörper) zu passiver Ta-Masse (Unterlage Ta-Blech) und damit im Vergleich zu gepressten Anoden höhere Materialkosten aufweisen.

Aufgabe der vorliegenden Erfindung war es daher, ein Verfahren zur Herstellung von Anoden auf Basis eines hochkapazitiven Pulvers auf dünner Ta- oder Nb-Folie und Anoden, erhältlich nach diesem Verfahren, bereit zu stellen, wobei die Anoden eine verringerte Verformung (Verzug) aufweisen.
Es wurde überraschend gefunden, dass diese Aufgabe durch eine spezielle Vorbehandlung der Folien gelöst werden kann.

### Beschreibung der Erfindung

Gegenstand der vorliegenden Erfindung, der definiert ist durch die Merkmale des Anspruchs 1, ist daher ein Verfahren zur Herstellung von Anoden, umfassend die Schritte:
a) Oxidieren der Oberfläche einer Folie, welche Tantal oder Niob umfasst;
b) Eindiffundierenlassen der an der Oberfläche gebildeten Oxide durch Erwärmen der Folie;
c) Auftragen einer Paste, umfassend Pulver, ausgewählt aus der Gruppe bestehend aus Tantal-, Niob-, Nioboxid-Pulver und Mischungen hiervon; und
d) Sintern der aufgetragenen Paste.
Schritt b) des erfindungsgemäßen Verfahrens bezieht sich auf das Eindiffundieren der in Schritt a) an der Oberfläche gebildeten Oxide durch Erwärmen der Folie. Ohne an die Theorie gebunden zu sein wird angenommen, dass das Eindiffundieren der an der Oberfläche gebildeten Oxidschicht in die Folie zu einer Art Vordehnung der Folie durch Einlagerung von interstitiellem Sauerstoff führt. Dies hat zur Folge, dass aufgrund der Vordehnung der Folie der in Schritt d) erfolgende Sinterungsschritt mit einem geringeren Verzug verbunden ist.
Die Bedingungen für das Eindiffundieren der an der Oberfläche gebildeten Oxide durch Erwärmen der Folie kann durch geeignete Wahl von Temperatur und Zeitdauer erzielt werden. So wird in US 2004/226630 A1 etwa die Herstellung von Ventilmetallsuboxidschichten beschrieben, welche erhalten werden, indem die Oberfläche von Presskörpern aus Ventilmetallen oder deren Legierungen zunächst oxidiert werden und die so entstandene Ventilmetal-Pentoxidschicht durch Eindiffundierenlassen in tiefere Bereiche zumindest partiell in ein entsprechendes Suboxid konvertiert wird. Es ist jedoch vorteilhaft, Schritt b) unter einem verminderten Druck oder alternativ unter einer Inertgasatmosphäre durchzuführen, um die vollständige Oxidation bzw. Weiteroxidation der Folie im Wesentlichen zu vermeiden.

Eine vorteilhafte Ausführungsform der vorliegenden Erfindung ist ein Verfahren zur Herstellung von Anoden, umfassend die Schritte:
a) Oxidieren der Oberfläche einer Folie, welche Tantal oder Niob umfasst;
b) Erwärmen der an der Oberfläche oxidierten Folie auf eine Temperatur oberhalb von 600°C, vorzugsweise für einen Zeitraum von mindestens 10 min.;
c) Auftragen einer Paste, umfassend Pulver, ausgewählt aus der Gruppe bestehend aus Tantal-, Niob-, Nioboxid-Pulver und Mischungen hiervon; und
d) Sintern der aufgetragenen Paste.
Das Verfahren gemäß der vorliegenden Erfindung eignet sich in besonderer Weise für die Verwendung sehr dünner Folien, die Tantal oder Niob umfassen oder im Wesentlichen aus Tantal oder Niob bestehen. In einer bevorzugten Ausführungsform weist die Folie eine mittlere Dicke unterhalb von 100 µm, vorzugsweise unterhalb von 60 µm, insbesondere im Bereich von 10 bis 50 µm und im Speziellen von 15 bis weniger als 30 µm auf.
Erfindungsgemäß kann die Folie ein Länge-zu-Breite-Verhältnis von 3:1 bis 10:1 oder mehr aufweisen, wobei eine Teilfläche von 0,5 bis 100 mm², vorzugsweise 2 bis 40 mm² der Folie ein- oder beidseitig mit dem Sinterkörper versehen ist.
Die nach dem erfindungsgemäßen Verfahren erhältlichen Anoden eignen sich insbesondere für Elektrolytkondensatoren, die flächig ausgebildet sind, d.h. deren geometrische Ausdehnung in zwei Dimensionen größer ist als in der dritten Dimension.
Vorzugsweise sind die erfindungsgemäßen Anoden so ausgebildet, dass die Folie den Sinterkörper in mindestens einer Richtung überragt. Hierdurch wird eine weiter verbesserte Wärmeableitung erzielt und die elektrische Kontaktierung vereinfacht.

Für das gezielte Oxidieren der Oberfläche der Folie in Schritt a) des erfindungsgemäßen Verfahrens sind prinzipiell mehrere Techniken geeignet. In dem erfindungsgemäßen Verfahren erfolgt das Oxidieren der Folienoberfläche durch ein Verfahren, das ausgewählt ist aus einer thermischen Oxidation, einer anodischen Oxidation, einer chemischen Oxidation und dem Aufbringen von Tantal(V)Oxid oder NbO durch Drucken, Tempern, Sputtern, physikalischer Gasphasenabscheidung (physical vapor deposition, PVD) oder chemischer Gasphasenabscheidung (chemical vapor deposition, CVD).

Wenn in Schritt a) die Oxidschicht durch Drucken, Tempern, Sputtern, PVD oder CVD aufgebracht wird, so kann dabei die Ta-Folie von einer Seite als auch von beiden Seiten beschichtet werden. Beispielsweise kann das Aufbringen einer Ta-Oxidschicht durch Drucken eines Ta-Oxidpulvers in Pastenform mit einer Korngröße von 400 mesh in einer Dicke von bis zu 5 Mikrometern durchgeführt werden.

Ebenfalls besonders bevorzugt in Schritt a) ist eine anodische Oxidation. In einer bevorzugten Ausführungsform der vorliegenden Erfindung wird in einer dem Fachmann bekannten Verfahrensweise eine Oxidschicht mittels einer für Ta-Bleche bzw. Ta-Folien dieser Dicke angepassten anodischen Oxidation aufgebracht.

Besonders bevorzugt erfolgt die Oxidation der Oberfläche der Folie durch thermische Oxidation bei einer Temperatur von 300 bis 800°C, vorzugsweise 350 bis 600°C, insbesondere bei 380 bis 550°C. Üblicher Weise erfolgt die thermische Oxidation der Oberfläche der Folie über einen Zeitraum von 10 bis 120 min.

Schritt b) der erfindungsgemäßen Verfahren erfolgt vorzugsweise bei einer Temperatur oberhalb von 600°C, weiter bevorzugt von 700 bis 2000°C, insbesondere von 750 bis 1600°C und im Speziellen von 900 bis 1300°C.

Die Dauer der thermischen Behandlung ist abhängig von der durchschnittlichen Dicke der Folie. Üblicherweise erfolgt die thermische Behandlung in Schritt b) der erfindungsgemäßen Verfahren über einen Zeitraum von mindestens 10 min, vorzugsweise 10 bis 240 min, insbesondere 20 bis 120 min.

Zur Vermeidung einer Weiteroxidation der Folien ist es vorteilhaft, Schritt b) unter einem verminderten Druck oder alternativ unter einer Inertgasatmosphäre, die vorzugsweise Edelgase umfasst und im Wesentlichen frei von Sauerstoff ist (speziell weniger als 10 Vol.-% Sauerstoff, insbesondere weniger als 5 Vol.-%, beispielsweise weniger als 2 Vol.-% Sauerstoff).

In einer bevorzugten Ausführungsform erfolgt die thermische Behandlung in Schritt b) der erfindungsgemäßen Verfahren bei einem Gasdruck unterhalb von 10⁻² bar, vorzugsweise unterhalb von 10⁻⁴ bar und insbesondere unterhalb 10⁻⁶ bar.

Des Weiteren wird das Auftragen der Paste in Schritt c) des Verfahrens der vorliegenden Erfindung in einer bevorzugten Ausführungsform mittels Siebdruck und in einer anderen besonders bevorzugten Ausführungsform mittels Schablonendruck durchgeführt.

Dabei umfasst die Paste bevorzugt zwischen 40 und 92 % Tantal oder Niob oder Niob-Monoxid (Niobsuboxid) als diskrete Phase und eine kontinuierlichen Phase, die im Wesentlichen nur aus Kohlenstoff-, Wasserstoff- und Sauerstoffatomen aufgebauten organischen Verbindungen, wobei das Verhältnis von Sauerstoff- zu Kohlenstoffatomen mindestens 0,5 beträgt, sowie gegebenenfalls ein unter 150 °C verdampfendes Lösungsmittel umfasst. Besonders bevorzugt beträgt der Anteil von Niob, Niob-Monoxid oder Tantal 50 bis 90 Gew.-%, bezogen auf das Gesamtgewicht der Paste.

Bevorzugt werden als organische Verbindungen bei Raumtemperatur flüssige Verbindungen eingesetzt. In diesem Falle ist die kontinuierliche Phase bevorzugt im Übrigen lösungsmittelfrei. Als flüssige organische Verbindungen geeignet sind Ethylenglykol, Diethylenglykol, Tri- und Tetraethylenglycol sowie deren Ester, Glycerin, Glycerin-monoacetat, Glycerin-diacetat, Glycerin-triacetat, Dioxyaceton, Propandiol oder auch deren Mischungen. Weiter bevorzugt enthält die kontinuierliche Phase zusätzlich ein organisches Bindemittelsystem. Das Bindemittel soll in Mengen von nicht mehr als 5 Gew.-%, bezogen auf die kontinuierliche Phase, eingesetzt werden. Ein bevorzugtes Bindemittelsystem besteht aus Natrosol Plus 331 der Firma Hercules oder einem Acrylpolymeren, beispielsweise Rohagit KF 720 der Firma Rohm oder einer Hydroxypropylcellulose. Zur besseren Benetzung des Metallpulvers werden vorzugsweise Netzmittel, wie beispielsweise Sojalecithin der Fa. Langer und/oder Surfinole der Fa. Biesterfeld, eingesetzt. Sofern das Bindemittel nur in untergeordneten Mengen eingesetzt wird, wird das Verhältnis von Sauerstoffatomen zu Kohlenstoffatomen in der kontinuierlichen Phase im Wesentlichen nicht beeinflusst. Der mit dem Sojalecithin in die kontinuierliche Phase eingeführte Phosphor und der Stickstoff sind unschädlich, da Phosphor und Stickstoff zu den üblichen Dotierungssubstanzen von für Kondensatoren einsetzbare Tantalpulver oder Niobpulver gehören.

Das Bindemittelsystem wird bevorzugt so eingestellt, dass die Viskosität der Paste im Bereich von 150 - 500 Pa s (bei Scherrate 1 s⁻¹) und im Bereich von 20 - 75 Pa s (bei Scherrate 10 s⁻¹) gemessen mit einem Rotations-Rheometer der Fa. Bohlin, Typ Gemini 200 HR NANO unter Verwendung eines Platte-Kegel (4°) Systems (20 mm Durchmesser) bei 25°C. In einer weiteren Ausführungsform der Erfindung kann die organische Verbindung auch eine feste Substanz sein. Geeignete bei Raumtemperatur feste organische Verbindungen sind Erythrit, Pentaerythrit, Pentite, Aldosen oder Ketosen mit 3 bis 6 Kohlenstoffatomen oder deren Mischungen. Ferner sind Zucker oder zuckerähnliche Verbindungen geeignet. Feste organische Verbindungen werden in Verbindung mit einem Lösungsmittel eingesetzt, wobei das Lösungsmittel bei Temperaturen bis 150 °C verdampfen soll. Als Lösungsmittel geeignet sind beispielsweise Wasser, Ethanol, Propanol und kurzkettige Glycole.

Als Lösungsmittel geeignet sind ferner die genannten flüssigen organischen Verbindungen, soweit die festen organischen Verbindungen in diesen ausreichend löslich sind. Die festen organischen Verbindungen können demgemäß als Verdickungsmittel eingesetzt werden, wenn als Hauptkomponente der kontinuierlichen Phase flüssige organische Verbindungen eingesetzt werden.

Pasten, wie sie in der vorliegenden Erfindung vorteilhaft eingesetzt werden können, sind beispielsweise in WO-A-00/16353 beschrieben.

Unter Siebdruck gemäß der vorliegenden Erfindung wird ein dem Fachmann bekannter Vorgang verstanden, in dem die oben beschriebene Paste mittels einer Druckrakel durch ein Sieb, typischerweise mit einer lichten Maschenweite im Bereich von 20 bis 100 µm auf die Ta-Folie aufgebracht wird. Dabei werden in einer ersten Phase die Maschen des Siebes von einer Füllrakel mit der Paste gefüllt. In einer anschließenden zweiten Phase stellt eine Druckrakel einen Linienkontakt mit der Ta-Folie ein, wobei der Rakelwinkel zusammen mit der Rakelgeschwindigkeit, die Geometrie des Siebes und der Pastenkonsistenz den Druck, durch den die Paste in den Maschen des Siebes komprimiert wird, bestimmt. Somit durchdringt die komprimierte Ta-/Nb-Paste die Maschen des Siebes vor der Rakelkante und wird durch Adhäsionskräfte auf der Ta-Folie festgehalten. Abschließend löst sich die auf der Ta-Folie haftende Paste aus den Maschen des Siebes aus.

Bei dem in einer besonders bevorzugten Ausführungsform eingesetzten, dem Fachmann ebenfalls bekannten Schablonendruck-Verfahren wird das Sieb durch eine Schablone ersetzt.

In einer vorteilhaften Ausführungsform umfasst die Paste in Schritt c) ein Tantalpulver. Insbesondere ist die Verwendung eines Ta-Pulvers mit einer Kapazität von 15000 bis 300000 µFV/g bevorzugt.

Geeignete Pulver, die für die Paste eingesetzt werden können, sind beispielsweise unter den Handelsnamen STA200KA, STA150K, STA100K, STA70KA, STA50KF, NbO80K und dergleichen von der Firma H.C. Starck (Goslar, Deutschland) erhältlich.

In einer besonders bevorzugten Ausführungsform der vorliegenden Erfindung umfasst das Verfahren die folgenden Schritte:
a) Oxidieren der Oberfläche einer Folie, umfassend Tantal, wobei die mittlere Dicke der Folie unterhalb von 60 µm liegt, durch thermische Oxidation bei 300 bis 800°C;
b) Erwärmen der an der Oberfläche oxidierten Folie auf 900 bis 1600°C und einem Druck unterhalb von 10⁻² bar;
c) Auftragen einer Paste, umfassend Tantalpulver, vorzugsweise einer Paste, die 50 bis 90 Gew.-% Tantalpulver umfasst, durch Schablonendruck oder Siebdruck;
d) Sintern der aufgetragenen Paste; und
e) gegebenenfalls Vereinzeln der Anoden.
Die Separierung (das Vereinzeln) der einzelnen Anoden im Schritt e) erfolgt nach dem Fachmann bekannten Verfahren wie z.B. Sägen mittels Wafer-Säge, Lasertrennen mit einem gepulsten Faserlaser.
Eine Herstellung von ultraflachen, verzerrungsfreien Anoden gemäß dem Verfahren der vorliegenden Erfindung umfasst daher besonders bevorzugt a) das oberflächliche Oxidieren einer Ta-Folie von 25-50 Mikrometer Dicke und Abmessungen von 10 x 10 cm² durch eine thermische Oxidation für 10 bis 120 min im Bereich von 300 bis 800°C, b) anschließendem Erhitzen im Vakuum bei 1100°C, c) das Aufbringen einer Ta-Paste mit einem Ta-Gehalt von 80-90 Gew.% mittels Schablonendruck mit einer Dicke im Bereich von 35 bis 150 Mikrometer auf maximal 85 % der Ta-Folienoberfläche, ein Trocknen und anschließendes d) Sintern der Anoden sowie e) die abschließende Separierung der einzelnen Anoden.
Ein weiterer Gegenstand der vorliegenden Erfindung ist eine Anode, erhältlich nach dem Verfahren der vorliegenden Erfindung. In einer bevorzugten Ausführungsform der Anode gemäß der vorliegenden Erfindung weist die Anode eine horizontale Abmessung von 1 bis 10 mm und eine vertikale Abmessung von 25 bis 250 Mikrometern auf.

Ein weiterer Gegenstand ist die Verwendung der erfindungsgemäßen Anode für Festelektrolytkondensatoren und elektronische Bauteile, insbesondere für Kondensatoren in portablen Geräten, wie beispielsweise Mobilfunkgeräten, Laptops, Palmtops und Camcorder.
Das Sintern der Paste bzw. der Folien, auf die die Paste aufgetragen wurde, erfolgt unter den dem Fachmann geläufigen Bedingungen, vorzugsweise bei Temperaturen zwischen 800 und 1500°C.

### Beispiele

Jeweils acht Tantal-Folien mit einer durchschnittlichen Dicke von 50 µm und einer Größe von 5 cm x 5 cm wurden zu Testzwecken herangezogen.

### Beispiel 1

Die Folien im Format von 8 cm x 5 cm wurden mittels anodischer Oxidation an der Oberfläche oxidiert. Die Oxidschicht wurde durch Formierung bei 125 V für 3 h bei geringstem Strom erhalten. Anschließend wurde eine Oxidschichtdicke von 95 nm gemessen und die Folien auf 5 cm x 5 cm zugeschnitten.

### Beispiel 2

Die Folien wurden in Format 5 cm x 5 cm wurden durch eine thermische Oxidation in einem Brennofen der Firma Nabertherm (Typ HAT 16/17 mit 16 Liter Volumen) bei 400 °C an Luft innerhalb von 1 h oberflächlich oxidiert. Als Unterlagen dienten zwei Mitläuferfolien.

### Beispiel 3

Die Folienstücke wurden mit 150KA-Paste (H.C. Starck) mit einem 200-mesh-Sieb beidseitig bis zu deiner Dicke von ca. 10 Mikrometern bedruckt. Druckparameter:

| | |
|---|---|
| Druckmasse | 0,091 - 0,093 g |
| Flutrakel | 90 Shore pendelnd |
| Druckrakel | Flutrakel |
| Schablone | Sieb 200 mesh |
| Rakeldruck | 110 N |
| Druckgeschwindigkeit | 20 mm/s |
| Snap Off | Mittel |
| Absprung | 0.65mm |
| Rakelweg | 25mm/210mm |
| Druckvariante | Variabel |
| Trocknung | Im Umluft-Trockenschrank - 50 °C - 60 min auf einem Hordenblech |
| Pastenrückführung | Ohne |

### Beispiel 4

Wie Beispiel 3 mit der Abweichung, dass die Folien nur auf einer Seite bedruckt wurden und eine Druckmasse von 0,090 - 0,097 g verwendet wurde.

In den Beispielen 1 bis 4 wurden anschließend die Folienstücke jeweils im Vakuum (10⁻⁶ bar) bei maximal 1100 °C für 2 h erhitzt (Aufheizintervall: 10 K/min auf 100 °C, 2 h dwell (dwell = Haltezeit), 25 K/min auf 450 °C, 1 h dwell, 25 K/min auf 1100 °C, 2 h dwell). Als Vergleichsbeispiel 1 wurde eine Ta-Folie mit 50 µm Dicke verwendet, die weder an der Oberfläche oxidiert noch im Vakuum erhitzt wurde.

| | **Vorbehandlung vor 1100 °C-Sinterung** | **O-Gehalt ppm** | **C-Gehalt ppm** | **N-Gehalt ppm** |
|---|---|---|---|---|
| Vergleichsbeispiel 1 | ohne | 215 | 61 | 43 |
| Beispiel 1 | Anodisiert | 1522 | 42 | 41 |
| Beispiel 2 | Thermisch oxidiert | 1715 | 38 | 39 |
| Beispiel 3 | Beidseitiger Druck | 1760 | 164 | 164 |
| Beispiel 4 | Einseitiger Druck | 993 | 130 | 103 |

Nach der thermischen Behandlung (entsprechend dem Schritt b) des Verfahrens) haben sowohl die anodisierten als auch die oxidierten Folien ihre Färbung verloren.

Anschließend wurden die Folien der Beispiele 1 bis 4 sowie die des Vergleichsbeispiels 1 per Siebdruck mit den Anodenstrukturen versehen. Druckparameter (halbautomatische Maschine des Herstellers EKRA des Typs M2)

| | |
|---|---|
| Schablone | 100 Mikrometer |
| Rakeldruck | 110 N |
| Druckgeschwindigkeit | 20 mm/s |
| Snap off | Mittel |
| Rakelweg | 35/200 mm |
| Druckvariante | Nr. 3 (TDDT) |
| Trocknung im Umlufttrockenschrank | 80 °C - 30 min - Horde |
| Pastenrückführung | Nach jedem 2. Druck |

Druckmassen jeweils ca. 0,8 g.
Abschließend wurden die bedruckten Folien gesintert (Sinterprogramm: 10 K/min auf 100 °C, 2 h dwell, 25 K/min auf 450 °C, 1 h dwell, 25 K/min auf 1240 °C, 2 h dwell) und vereinzelt.

Die auf diese Weise erhaltenen Anoden wurden danach auf Verzug, Haftung und Aussehen beurteilt. Die Anoden aus den Beispielen 1 bis 4 waren nicht verzogen und waren auch sonst für die weitere Verarbeitung in elektronischen Bauteilen sehr gut geeignet. Die Anoden des Vergleichsbeispiels 1 waren dagegen stark verzogen und insgesamt unbrauchbar.

Während die unbehandelte und die lediglich bei 1100°C im Vakuum behandelte Folie insbesondere am Rand und teilweise zwischen den randständigen Anoden stark verwölbt sind, zeigen die erfindungsgemäß behandelten Folien eine sehr geringe Randverwölbung und keine Verwölbung zwischen den randständigen Anoden.

Mittels Laserabtastung der Fa. OPM laserinterferometrisch gemessenen Profile und x-y Bereiche zeigen Ausschnitte von 20x20 mm² im Zentrum der Rückseiten der bedruckten Folien (bis zum Rand der 50x50 mm² großen Folien betrugen die Höhenunterschiede teilweise >1mm und lagen somit außerhalb des Meßbereichs des Interferometers).

Für Anoden auf unbehandelter Ta-Folie beträgt die Verwölbung im zentralen 20x20mm Ausschnitt in x-Richtung zum Rand 70 µm und diagonal 170 µm. Zwischen den Anoden im Zentrum beträgt der Höhenunterschied 20 µm.

Das gleiche Bild ergibt sich bei Anoden auf Folien, die lediglich bei 1100°C im Vakuum vorbehandelt, aber nicht voroxidiert wurden.

Für Anoden auf thermisch voroxidierter Folie beträgt die Verwölbung im zentralen 20x20mm Ausschnitt in x-Richtung zum Rand < 20 µm und diagonal < 90 µm. Zwischen den Anoden im Zentrum beträgt der Höhenunterschied max. 7 µm.

Für Anoden auf anodisch voroxidierter Folie beträgt die Verwölbung im zentralen 20x20mm Ausschnitt in x-Richtung zum Rand < 25 µm und diagonal < 60 µm. Zwischen den Anoden im Zentrum beträgt der Höhenunterschied max. 15 µm.

### Gewerbliche Anwendbarkeit

Durch das erfindungsgemäße Verfahren werden verzugsfreie ultraflache Anoden auf sehr dünnem Ta-Blech bereitgestellt. Diese eignen sich in hervorragender Weise für eine Vielzahl von Anwendungen in der Technik, insbesondere im Bereich portabler elektronischer und mikroelektronischer Geräte für den gewerblichen und privaten Bereich.

## Patentansprüche

1. Verfahren zur Herstellung von Anoden, umfassend die Schritte:
a) Oxidieren der Oberfläche einer Folie, wobei die Folie Tantal oder Niob umfasst, wobei das Oxidieren der Folienoberfläche durchgeführt wird durch ein Verfahren, das ausgewählt ist aus einer thermischen Oxidation, einer anodischen Oxidation, einer chemischen Oxidation und dem Aufbringen von Ta(V)oxid oder NbO durch Drucken, Tempern, Sputtern, PVD und CVD;
b) Eindiffundierenlassen der an der Oberfläche gebildeten Oxide durch Erwärmen der Folie;
c) Auftragen einer Paste auf die Folie, wobei die Paste Pulver umfasst, das ausgewählt ist aus der Gruppe bestehend aus Tantal-, Niob-, Nioboxid-Pulver und Mischungen hiervon; und
d) nach dem Eindiffundierenlassen aus Schritt b) Sintern der aufgetragenen Paste.

2. Verfahren gemäß Anspruch 1, wobei die Folie eine mittlere Dicke unterhalb von 100 µm, vorzugsweise unterhalb von 60 µm, insbesondere von 10 bis 50 µm, speziell von 15 bis weniger als 30 µm aufweist.

3. Verfahren gemäß Anspruch 1 oder 2, wobei das Oxidieren der Folienoberfläche durch thermische Oxidation bei 300 bis 800°C, vorzugsweise über einen Zeitraum von 10 bis 120 min erfolgt.

4. Verfahren gemäß mindestens einem der vorangehenden Ansprüche, **dadurch gekennzeichnet, dass** das Eindiffundieren in Schritt b) bei einer Temperatur oberhalb von 600°C, vorzugsweise von 700 bis 2000°C, insbesondere von 750 bis 1600°C und im Speziellen von 900 bis 1300°C erfolgt.

5. Verfahren gemäß mindestens einem der vorangehenden Ansprüche, **dadurch gekennzeichnet, dass** das Eindiffundierenlassen in Schritt b) über einen Zeitraum von mindestens 10 min, vorzugsweise 10 bis 240 min, insbesondere 20 bis 120 min, erfolgt.

6. Verfahren gemäß mindestens einem der vorangehenden Ansprüche, **dadurch gekennzeichnet, dass** das Eindiffundierenlassen der an der Oberfläche gebildeten Oxide bei einem Gasdruck unterhalb von 10⁻² bar, vorzugsweise unterhalb von 10⁻⁴ bar, insbesondere unterhalb von 10⁻⁶ bar, erfolgt.

7. Verfahren gemäß mindestens einem der Ansprüche 1 bis 5, **dadurch gekennzeichnet, dass** das Eindiffundierenlassen der an der Oberfläche gebildeten Oxide durch Erwärmen der Folie in einer Inertgasatmosphäre, vorzugsweise umfassend Edelgase, erfolgt.

8. Verfahren gemäß wenigstens einem der vorangehenden Ansprüche, **dadurch gekennzeichnet, dass** das Auftragen in Schritt c) durch Siebdruck oder Schablonendruck erfolgt.

9. Verfahren gemäß wenigstens einem der vorangehenden Ansprüche, **dadurch gekennzeichnet, dass** die Paste in Schritt c) ein Tantalpulver umfasst.

10. Verfahren gemäß Anspruch 9, **dadurch gekennzeichnet, dass** das Tantalpulver eine spezifische Kapazität im Bereich von 15 000 bis 300 000 µFV/g aufweist.

11. Verfahren gemäß mindestens einem der vorangehenden Ansprüche, wobei
a) beim Oxidieren der Oberfläche der Folie die mittlere Dicke der Folie unterhalb von 60 µm liegt und das Oxidieren durch thermische Oxidation bei 300 bis 800°C erfolgt;
b) beim Erwärmen die Folie auf 900 bis 1600°C bei einem Druck unterhalb von 10⁻² bar erwärmt wird;
c) beim Auftragen der Paste eine Paste verwendet wird, welche vorzugsweise eine Paste ist, die 50 bis 90 Gew.-% Tantalpulver umfasst, und das Auftragen durch Schablonendruck oder Siebdruck erfolgt; und
e) die Anoden gegebenenfalls vereinzelt werden.

12. Anode, erhältlich nach dem Verfahren gemäß mindestens einem der vorigen Ansprüche.

13. Anode gemäß Anspruch 12, wobei die Anode eine horizontale Abmessung von 2 bis 10 mm und eine vertikale Abmessung von 25 bis 250 Mikrometern aufweist.

14. Verwendung der Anode gemäß Anspruch 12 oder 13 für Festelektrolytkondensatoren und elektronische Bauteile, insbesondere für Kondensatoren in portablen Geräten, wie beispielsweise Mobilfunkgeräten, Laptops, Palmtops und Camcorder.

## Claims

1. Process for producing anodes, which comprises the steps:
a) oxidation of the surface of a foil, the foil comprising tantalum or niobium, wherein oxidation of the foil surface is effected by means of a process selected from among thermal oxidation, anodic oxidation, chemical oxidation and application of tantalum(V) oxide or NbO by printing, heat treatment, sputtering, PVD and CVD;
b) heating of the foil to allow the oxides formed on the surface to diffuse in;
c) application of a paste to the foil, the paste comprising powder which is selected from the group consisting of tantalum powder, niobium powder, niobium oxide powder and mixtures thereof; and
d) sintering of the applied paste after allowing the diffusion into the foil from step b).

2. Process according to Claim 1, wherein the foil has an average thickness below 100 pm, preferably below 60 pm, in particular in the range from 10 to 50 µm and especially from 15 to < 30 µm.

3. Process according to Claim 1 or 2, wherein the oxidation of the foil surface is carried out by thermal oxidation at from 300 to 800°C, preferably over a period of from 10 to 120 minutes.

4. Process according to at least one of the preceding claims, **characterized in that** the diffusion into the foil in step b) is carried out at a temperature above 600°C, preferably from 700 to 2000°C, in particular from 750 to 1600°C and especially from 900 to 1300°C.

5. Process according to at least one of the preceding claims, **characterized in that** the diffusion into the foil in step b) is allowed to occur for a time of at least 10 minutes, preferably from 10 to 240 minutes, in particular from 20 to 120 minutes.

6. Process according to at least one of the preceding claims, **characterized in that** the oxides formed at the surface are allowed to diffuse in at a gas pressure below 10⁻² bar, preferably below 10⁻⁴ bar, in particular below 10⁻⁶ bar.

7. Process according to at least one of Claims 1 to 5, **characterized in that** the oxides formed at the surface are allowed to diffuse in by heating the foil in an inert gas atmosphere, preferably comprising noble gases.

8. Process according to at least one of the preceding claims, **characterized in that** the application in step c) is carried out by screen printing or stencil printing.

9. Process according to at least one of the preceding claims, **characterized in that** the paste in step c) comprises a tantalum powder.

10. Process according to Claim 9, **characterized in that** the tantalum powder has a specific capacitance in the range from 15 000 to 300 000 pFV/g.

11. Process according to at least one of the preceding claims, wherein
a) upon oxidation of the surface of the foil, the average thickness of the foil is below 60 µm and the oxidation is carried out by thermal oxidation at from 300 to 800°C;
b) upon heating, the foil is heated to a temperature from 900 to 1600°C at a pressure below 10⁻² bar;
c) upon application of the paste, a paste is used which is preferably a paste comprising from 50 to 90% by weight of tantalum powder, and the application is carried out by stencil printing or screen printing; and
e) the anodes are optionally parted.

12. Anode which can be obtained by the process according to at least one of the preceding claims.

13. Anode according to Claim 12, wherein the anode has a horizontal dimension of from 2 to 10 mm and a vertical dimension of from 25 to 250 microns.

14. Use of the anode according to Claim 12 or 13 for solid-electrolyte capacitors and electronic components, in particular for capacitors in portable devices such as mobile telecommunications devices, laptops, palmtops and camcorders.

## Revendications

1. Procédé de fabrication d'anodes, comprenant les étapes suivantes :
a) l'oxydation de la surface d'une feuille, la feuille comprenant du tantale ou du niobium, l'oxydation de la surface de la feuille étant réalisée par un procédé qui est choisi parmi une oxydation thermique, une oxydation anodique, une oxydation chimique et l'application d'oxyde de Ta(V) ou de NbO par impression, recuit, pulvérisation, dépôt physique en phase vapeur (PVD) et dépôt chimique en phase vapeur (CVD) ;
b) la diffusion des oxydes formés sur la surface par chauffage de la feuille ;
c) l'application d'une pâte sur la feuille, la pâte comprenant une poudre, qui est choisie dans le groupe constitué par les poudres de tantale, de niobium, d'oxyde de niobium et leurs mélanges ; et
d) après la diffusion selon l'étape b), le frittage de la pâte appliquée.

2. Procédé selon la revendication 1, dans lequel la feuille présente une épaisseur moyenne inférieure à 100 pm, de préférence inférieure à 60 pm, notamment de 10 à 50 pm, spécialement de 15 à moins de 30 µm.

3. Procédé selon la revendication 1 ou 2, dans lequel l'oxydation de la surface de la feuille a lieu par oxydation thermique à une température de 300 à 800 °C, de préférence pendant une durée de 10 à 120 minutes.

4. Procédé selon au moins l'une quelconque des revendications précédentes, **caractérisé en ce que** la diffusion à l'étape b) a lieu à une température supérieure à 600 °C, de préférence de 700 à 2 000 °C, notamment de 750 à 1 600 °C et spécialement de 900 à 1 300 °C.

5. Procédé selon au moins l'une quelconque des revendications précédentes, **caractérisé en ce que** la diffusion à l'étape b) a lieu pendant une durée d'au moins 10 minutes, de préférence de 10 à 240 minutes, notamment de 20 à 120 minutes.

6. Procédé selon au moins l'une quelconque des revendications précédentes, **caractérisé en ce que** la diffusion des oxydes formés sur la surface a lieu à une pression de gaz inférieure à 10⁻² bar, de préférence inférieure à 10⁻⁴ bar, notamment inférieure à 10⁻⁶ bar.

7. Procédé selon au moins l'une quelconque des revendications 1 à 5, **caractérisé en ce que** la diffusion des oxydes formés sur la surface a lieu par chauffage de la feuille dans une atmosphère de gaz inerte, de préférence comprenant des gaz nobles.

8. Procédé selon au moins l'une quelconque des revendications précédentes, **caractérisé en ce que** l'application à l'étape c) a lieu par sérigraphie ou impression au pochoir.

9. Procédé selon au moins l'une quelconque des revendications précédentes, **caractérisé en ce que** la pâte à l'étape c) comprend une poudre de tantale.

10. Procédé selon la revendication 9, **caractérisé en ce que** la poudre de tantale présente une capacité spécifique dans la plage allant de 15 000 à 300 000 pFV/g.

11. Procédé selon au moins l'une quelconque des revendications précédentes, dans lequel
a) lors de l'oxydation de la surface de la feuille, l'épaisseur moyenne de la feuille est inférieure à 60 µm et l'oxydation a lieu par oxydation thermique à une température de 300 à 800 °C ;
b) lors du chauffage, la feuille est portée à une température de 900 à 1 600 °C à une pression inférieure à 10⁻² bar ;
c) lors de l'application de la pâte, une pâte qui est de préférence une pâte qui comprend 50 à 90 % en poids de poudre de tantale est utilisée, et l'application a lieu par impression au pochoir ou sérigraphie ; et
e) les anodes sont éventuellement séparées.

12. Anode, pouvant être obtenue par le procédé selon au moins l'une quelconque des revendications précédentes.

13. Anode selon la revendication 12, dans laquelle l'anode présente une dimension horizontale de 2 à 10 mm et une dimension verticale de 25 à 250 micromètres.

14. Utilisation de l'anode selon la revendication 12 ou 13 pour des condensateurs à électrolyte solide et des composants électroniques, notamment pour des condensateurs dans des appareils portables, tels que par exemple des téléphones portables, des ordinateurs portables, des ordinateurs de poche et des caméscopes.
